# EUROPÄISCHE PATENTSCHRIFT

(11) **EP 3 686 112 B1**
(45) Veröffentlichungstag und Bekanntmachung des Hinweises auf die Patenterteilung: **03.11.2021**
(21) Anmeldenummer: 19203606.9
(22) Anmeldetag: 16.10.2019
(51) Int. Cl.: B65B 21/12, B25J 15/00, B65B 21/18, B65B 35/18, B65G 47/90

(54) **GREIFEINRICHTUNG FÜR GETRÄNKEBEHÄLTER UND VERFAHREN ZUM HERSTELLEN EINER GREIFEINRICHTUNG**
GRIPPING DEVICE FOR BEVERAGE CONTAINERS AND METHOD FOR PRODUCING A GRIPPING DEVICE
DISPOSITIF DE PRÉHENSION POUR RÉCIPIENTS DE BOISSON ET PROCÉDÉ DE FABRICATION D'UN DISPOSITIF DE PRÉHENSION

(30) Priorität: 14.12.2018 DE 102018132308
(43) Veröffentlichungstag der Anmeldung: 29.07.2020
(73) Patentinhaber: Krones Aktiengesellschaft, 93073 Neutraubling (DE)
(72) Erfinder: KIRSCHNER, Peter, 93073 Neutraubling (DE); PERL, Kurt, 93073 Neutraubling (DE); BEINHOFER, Manfred, 93073 Neutraubling (DE)
(74) Vertreter: Benninger, Johannes

(56) Entgegenhaltungen:
- DE-B- 1 154 035
- DE-T2-602005 004 482
- DE-U- 6 805 541
- US-A- 2 929 653
- US-A- 3 554 594
- US-A1- 2016 096 278

## Beschreibung

Die vorliegende Erfindung betrifft eine Greifeinrichtung für Getränkebehälter und ein Verfahren zum Herstellen einer Greifeinrichtung für Getränkebehälter.

Vor allem in der Getränkeindustrie, aber auch in anderen Bereichen der Lebensmittelindustrie oder der Verpackungsindustrie werden sog. Pack- oder Greiftulpen zum Umgang mit Artikeln, wie etwa Behältern, insbesondere Flaschen eingesetzt. Der Umgang kann bspw. vorsehen, Artikel, wie bspw. Behälter, insbesondere Flaschen, von einem Ort zu einem anderen Ort zu versetzen oder in eine Umverpackung, etwa eine Kartonage oder einen Getränkekasten einzusetzen.

Ein Artikel oder ein Getränkebehälter, welcher mittels aus dem Stand der Technik bekannten Greiftulpen entgegengenommen werden kann, besitzt eine seitliche Mantelfläche, welche sich normalerweise im Bereich eines oberen Halsabschnittes verjüngt. An einem obenliegenden Endbereich kann ein solcher Getränkebehälter oder eine solche Getränkeflasche über einen Deckel verschlossen sein.

Um Artikel wie etwa Getränkeflaschen mittels Greiftulpen zu versetzen oder in eine Umverpackung einzusetzen, wird eine Greiftulpe beim kopfseitigen Ergreifen von oben her kommend auf einen Artikel abgesenkt, bis die Greiftulpe mit ihren Greifmitteln zumindest einen als Kontaktabschnitt vorgesehenen oberen Teil der Mantelfläche des Artikels wenigstens teilweise umfasst. Durch eine Betätigung oder Aktivierung von Greifelementen der Greiftulpe wird der Artikel sodann an der betreffenden Greiftulpe festgesetzt, kann aber bedarfsweise auch wieder von der Greiftulpe gelöst werden. Wird die Greiftulpe angehoben, so wird auch der an der Greiftulpe festgesetzte Artikel zusammen mit der Greiftulpe angehoben. Ist der Getränkebehälter an einen Zielort überführt, so kann die zwischen der Greiftulpe und dem Getränkebehälter bestehende Greifverbindung aufgehoben werden und die Greiftulpe zur Entgegennahme weiter Artikel in Richtung der weiteren Artikel bewegt werden.

Im Stand der Technik existieren zudem Ausführungsformen, bei welchen mehrere oder eine Vielzahl an Greiftulpen als Bestandteil einer Greifeinrichtung ausgebildet sind, über welche Greifeinrichtung mehrere Artikel gleichzeitig entgegengenommen und gehandhabt werden können.

Durch DE 20 2005 011 971 U1 ist eine Greiftulpe zum kopfseitigen Ergreifen von insbesondere durch Korken, Kronkorken, Schraub- oder Bügelverschluss verschließbaren Flaschen bekannt. Diese bekannte Greiftulpe weist in einem topfförmigen Gehäuse einen hülsenförmigen, mit seinem vorderen Ende am Topfrand des Gehäuses abgestützten, elastisch verformbaren Einsatz und einen auf den Einsatz an dessen rückseitigem Ende mit einer axialen Druckkraft einwirkenden Stellkolben auf. Das Gehäuse der Greiftulpe ist im vorderen Bereich von einer radial nach außen elastisch verformbaren Wand gebildet.

US 2016/0096278 A1 offenbart ein Sauginstrument mit einem Verbindungsmittel, einem Gummifuß und einem Balg, welcher Balg über einen Vorsprung verfügt und über diesen Vorsprung in einer Ausnehmung des Verbindungsmittels angeordnet ist. Über das Sauginstrument können Artikel durch Unterdruck entgegengenommen werden.

Aus der US 2,929,653 A1 ist ein Greifinstrument bekannt, mit welchem Flaschen angehoben werden können. Hierzu umfasst das Greifinstrument eine Hülse, in welche ein Flaschenhalt zur Entgegennahme eingetaucht wird. Mit der Hülse ist eine Säule verbunden, die flexibel ausgebildet ist. Die Säule ist weiter an einem Rahmen angeordnet.

Die CN 202 107 099 U offenbart eine Greiftulpe, deren Greifmittel zwei einander gegenüberliegend angeordnete zweiseitige Hebel umfassen. Jeder der beiden zweiseitigen Hebel ist um eine von zwei parallel verlaufenden Horizontalachsen verschwenkbar. Ein unterer, zum Erfassen eines Artikels vorgesehener Hebelarm jedes zweiseitigen Hebels ist als Greifbacke ausgebildet. Ein oberer, zur Einwirkung eines mittels einer Betätigungseinrichtung auf und ab beweglichen Keils vorgesehener Hebelarm jedes zweiseitigen Hebels steht mit einer Feder in Verbindung. Durch Einführen eines über die Betätigungseinrichtung auf und ab beweglichen Keils zwischen die oberen Teile der beiden zweiseitigen Hebel bewegen sich die Greifbacken zangenartig aufeinander zu, um einen Artikel kopfseitig zu ergreifen und schließlich die Halteposition zu erreichen. Ein Zurückziehen des Keils bewirkt ein Öffnen der Greifbacken und damit ein Loslassen eines ergriffenen Artikels.

Aus der DE 10 2011 051 926 A1 ist eine Greiftulpe bekannt, die sich zum Erreichen einer Halteposition ihrer als Greifbacken ausgeführten Greifmittel ebenfalls einer Keilwirkung bedient. Indem der Keil mit einem nachfolgenden Abschnitt zusammenwirkt, der zwischen zwei mechanisch stabilen Zuständen gewechselt werden kann, sind jeweils betätigungskraftfreie Haltepositionen ermöglicht. Durch den sich an den Keil anschließenden, geraden Abschnitt mit parallelen, gegenüberliegenden Seiten kann diese Greiftulpe eine kraftfrei einzuhaltende Halteposition einnehmen.

Die DE 10 2012 101 554 A1 offenbart eine weitere Greiftulpe, deren Greifmittel wenigstens drei den Kontaktabschnitt eines Artikels allseitig in etwa gleicher Höhe umgreifende Greifzungen umfassen. Jede der Greifzungen ist schwenkbar oder elastisch an einem Halterahmen der Greiftulpe aufgehängt und stützt sich dort ab. An ihren dem Halterahmen abgewandten Stirnflächen weisen die Greifzungen jeweils nach innen zum Kontaktabschnitt hin aufeinander zu. Die Greifzungen werden durch kopfseitiges Absenken der Greiftulpe parallel zur sich normal zur Grundfläche erstreckenden Höhe eines Artikels über einen Halsabschnitt des Artikels gegen elastische Rückstellkräfte schräg nach oben auseinander gedrückt und jeweils in eine Winkellage zum Halterahmen gebracht, wobei sich die Stirnflächen der Greifzungen form- und/oder kraftschlüssig gegen den Kontaktabschnitt des Artikels abstützen.

Bei vielen oder sogar den meisten der aus dem Stand der Technik bekannten Greiftulpen ist vorgesehen, dass diese pneumatisch und über Unterdruck betätigt werden. Hierfür erforderliche pneumatische Leitungsverbindungen müssen an der Greifeinrichtung angeordnet bzw. befestigt und dichtend angeschlossen werden, womit zwangsläufig ein hoher Aufwand bei einer Herstellung solcher Greifeinrichtung verbunden ist. Auch sind pneumatische Leitungsverbindungen teuer in der Anschaffung. Werden Getränkebehälter über die jeweilige Greifeinrichtung entgegengenommen und an einen Zielort überführt, so kann es sein, dass sich weitere Einrichtungen und/oder Objekte ungewollt mit den außenliegenden pneumatischen Leitungsverbindungen verkeilen, wodurch die jeweilige Greifeinrichtung ggf. ungewollt beschädigt wird.

Eine vorrangige Aufgabe der Erfindung kann daher darin gesehen werden, eine Greifeinrichtung und ein entsprechendes Verfahren zum Herstellen einer Greifeinrichtung zur Verfügung zu stellen, mittels welchen sich die genannten Probleme vermeiden oder zumindest reduzieren lassen.

Die obige Aufgabe wird durch eine Greifeinrichtung und ein Verfahren gelöst, welche die Merkmale in den unabhängigen Ansprüchen umfassen. Weitere vorteilhafte Ausgestaltungen werden durch die Unteransprüche beschrieben.

Die Erfindung betrifft eine Greifeinrichtung für Artikel wie insbesondere Getränkebehälter. Bei den Getränkebehältern, welche mittels der Greifeinrichtung entgegengenommen werden können, kann es sich insbesondere um Glasflaschen handeln. Bei den Getränkebehältern, welche mittels der Greifeinrichtung entgegengenommen werden können, kann es sich jedoch insbesondere auch um PET-Flaschen handeln. Auch Mischformen, d.h. solche Flaschen, die aus einem Materialmix gefertigt sind, können als Artikel oder Getränkebehälter im Sinne der Definition der vorliegenden Erfindung gelten.

Die Greifeinrichtung umfasst eine Aufhängung sowie mindestens ein Greifmittel, welches einen Getränkebehälter durch Druckluft bzw. durch Überdruck oder Unterdruck entgegennehmen kann. Wenn im vorliegenden Zusammenhang von Überdruck oder Unterdruck gesprochen wird, so ist damit ein Druckmedium wie insbesondere Druckluft gemeint, das zur Erzeugung einer Saugwirkung oder einer Greifwirkung in der Greifeinrichtung eingesetzt wird. Da die erfindungsgemäße Greifeinrichtung sowohl mit Unterdruck als auch mit Überdruck arbeiten kann, und da als Druckmedium ein kompressibles und kostengünstig verfügbares Gas wie Druckluft zum Einsatz kommt, wird im weiteren Zusammenhang der Beschreibung sowie auch der Ansprüche oftmals generalisierend von Druckluft gesprochen. Diese verwendete Begrifflichkeit soll keinesfalls einschränkend verstanden werden, so dass bedarfsweise für den verwendeten Begriff der "Druckluft" auch der Begriff "Unterdruck" oder ggf. auch ersatzweise der Begriff des Überdrucks eingesetzt werden kann. Wenn an manchen Stellen auch in etwas unpräziser Ausdrucksweise von einem Vakuum gesprochen wird, so ist damit ― im Bewusstsein, dass ein absolutes Vakuum bei technischen Anwendungen kaum möglich, aber auch kaum wünschenswert ist ― ein starker Unterdruck gemeint, der einen geringen Restdruck umfassen kann.

Die Aufhängung der Greifeinrichtung kann als Platte ausgebildet sein, welche bspw. zwei sich gegenüberliegende und ggf. quadratisch geformte Breitseitenflächen besitzt. Umfasst die Greifeinrichtung mehrere Greifmittel oder wenigstens ein erstes Greifmittel sowie zudem wenigstens ein zweites Greifmittel, so kann die Aufhängung oberhalb des wenigstens einen ersten Greifmittels und des wenigstens einen zweiten Greifmittels positioniert sein, wobei Randbereiche der Aufhängung das wenigstens eine erste Greifmittel und das wenigstens eine zweite Greifmittel seitlich überragen, oder wobei Randbereiche der Aufhängung seitlich über das wenigstens eine erste Greifmittel und das wenigstens eine zweite Greifmittel hinausreichen.

Weiter umfasst die Greifeinrichtung wenigstens eine Feder, über welche das mindestens eine Greifmittel mit der Aufhängung in Verbindung steht. Bewährt haben sich bspw. Ausführungsformen, bei welchen jeder Feder der Greifeinrichtung ein eigener Flansch zugeordnet ist. Der jeweilige eigene Flansch kann ggf. an einem unteren Endbereich der Feder angeordnet sein. Denkbar ist hierbei, dass an einem jeweiligen eigenen Flansch jeweils ein zur Entgegennahme eines Getränkebehälters mit Druckluft (Unterdruck oder Überdruck) vorgesehenes Greifmittel lösbar befestigt werden kann.

So kann es bspw. sein, dass der jeweilige eigene Flansch und das jeweilige Greifmittel über Rast- und/oder Schnapp- und/oder Klemmverbindungen zusammenwirken, um das jeweilige Greifmittel lösbar am jeweiligen Flansch zu befestigen. In der Praxis haben sich Ausführungsformen bewährt, bei welchen auf den jeweiligen eigenen Flansch ein jeweiliges Greifmittel aufsteckbar ist.

Das wenigstens eine Greifmittel kann derart ausgebildet sein, dass das wenigstens eine Greifmittel über Druckluft (Unterdruck oder Überdruck) angesteuert wird und hiermit einhergehend einen jeweiligen Getränkebehälter mechanisch und ggf. mittels einer Greifbacke und/oder mittels eines Hebels fixiert bzw. entgegennimmt. Bewährt haben sich in der Praxis Ausführungsformen, bei welchen ein Unterdruck oder Überdruck auf das wenigstens eine Greifmittel übertragen wird, wobei der jeweilige Getränkebehälter mittels des auf das jeweilige Greifmittel übertragenen Unterdrucks oder Überdrucks angesaugt und am jeweiligen Greifmittel gehalten wird.

Es ist vorgesehen, dass die wenigstens eine Feder zumindest bereichsweise als hohler Schaft oder als gekrümmtes Hohlrohr ausgebildet ist. Es ist vorstellbar, dass das mindestens eine Greifmittel zur Entgegennahme des Getränkebehälters über den hohlen Schaft oder über das gekrümmte Hohlrohr mit Druckluft (Unterdruck oder Überdruck) beaufschlagbar ist. Denkbar ist alternativ oder ergänzend hierzu auch, dass in den hohlen Schaft bzw. in das gekrümmte Hohlrohr der wenigstens einen Feder elektrische Leitungsverbindungen der Greifeinrichtung, hydraulische Komponenten und/oder sensorische Komponenten, welches als Bestandteil der Greifeinrichtung ausgebildet sind, eingebracht sind. Durch die Ausbildung als hohler Schaft bzw. als gekrümmtes Hohlrohr und die Druckbeaufschlagung der Getränkebehälter bzw. das Einbringen von weiteren Komponenten der Greifeinrichtung in den hohlen Schaft bzw. in das gekrümmte Hohlrohr besitzt die Greifeinrichtung einen übersichtlichen und kompakten Aufbau.

Insbesondere kann es sein, dass die wenigstens eine Feder vollständig bzw. entlang ihres Verlaufs durchgehend als hohler Schaft oder als Hohlrohr ausgebildet ist, über welchen hohlen Schaft das mindestens eine Greifmittel zur Entgegennahme des Getränkebehälters mit Druckluft (Unterdruck oder Überdruck) beaufschlagbar ist.

Alternativ hierzu kann auch vorgesehen sein, dass das wenigstens eine Greifmittel anders als durch Druckluft angesteuert wird, etwa elektromotorisch, elektromagnetisch oder mittels Piezoelement o. dgl. So sei an dieser Stelle festgehalten, dass eine weitere alternative Ausführungsvariante der erfindungsgemäßen Greifeinrichtung eine ohne Druckluft arbeitende Ansteuerung des wenigstens einen Greifmittels vorsieht. In diesem Fall kann naturgemäß die Feder wahlweise als hohler Schaft oder als massiver Schaft ausgebildet sein. Da eine Druckluftführung für die Feder bei dieser Variante nicht erforderlich ist, so dass die Feder nicht als Leitung für Druckluft dienen muss, kann die Kraft- oder Energieübertragung für die Ansteuerung des Greifmittels anderweitig erfolgen, etwa mittels elektrischer Leitungen, die um die Feder gewickelt oder in diese eingeformt sind. Ebenso denkbar sind Fertigungsverfahren, bei denen folienartige elektrische Leitungen an den äußeren Oberflächen der Feder geführt und dort fest aufgebracht sind.

Wie oben bereits erwähnt, kann es sein, dass jeder Feder der Greifeinrichtung ein eigener Flansch zugeordnet ist. Die jeweilige Feder kann in den jeweiligen Flansch bzw. in den jeweiligen eigenen Flansch münden, so dass ein Unterdruck oder Überdruck von der jeweiligen Feder auf den jeweiligen Flansch bzw. auf den jeweiligen eigenen Flansch übertragbar ist. Ist ein jeweiliges Greifmittel lösbar am jeweiligen Flansch befestigt, so kann der jeweilige Unterdruck oder Überdruck sodann vom jeweiligen Flansch auf das jeweilige am Flansch befestigte Greifmittel übertragen werden.

Es kann sein, dass die wenigstens eine zumindest bereichsweise als hohler Schaft oder als Hohlrohr ausgebildete Feder wenigstens eine Schraubenfeder ist. Auch kann es sein, dass die wenigstens eine zumindest bereichsweise als hohler Schaft oder als Hohlrohr ausgebildete Feder wenigstens eine Schraubenfeder mit mindestens drei Windungen ist. Dies kann ggf. auch dadurch ausgedrückt werden, dass die Schraubenfeder eine jeweilige Windungszahl n besitzt, für welche gilt: n ≥ 3.

Die wenigstens eine zumindest bereichsweise als hohler Schaft ausgebildete Feder bzw. die wenigstens eine Schraubenfeder kann zwischen der Aufhängung und dem jeweiligen Greifmittel positioniert sein. Insbesondere kann es sein, dass die wenigstens eine zumindest bereichsweise als hohler Schaft ausgebildete Feder bzw. die wenigstens eine Schraubenfeder zwischen der Aufhängung und einem jeweiligen vorhergehend bereits beschriebenen eigenen Flansch positioniert bzw. angeordnet ist.

Bei der ohne Druckluft als Ansteuerung für die Greifeinrichtung oder das wenigstens eine Greifmittel arbeitenden Ausführungsvariante kann die Feder wahlweise bereichsweise als hohler Schaft oder als Hohlrohr ausgebildet sein. Hierbei kann die Feder bspw. eine Schraubenfeder sein. Ebenso denkbar sind varianten, bei denen die Feder durch ein massives und nicht hohl ausgeführtes Material gebildet ist, da keine Druckluft im Hohlraum zu führen ist. Auch kann es sein, dass die wenigstens eine entweder massiv oder zumindest bereichsweise als hohler Schaft oder als Hohlrohr ausgebildete Feder wenigstens eine Schraubenfeder mit mindestens drei Windungen ist. Dies kann ggf. auch dadurch ausgedrückt werden, dass die Schraubenfeder eine jeweilige Windungszahl n besitzt, für welche gilt: n ≥ 3.

Die wenigstens eine als massiver Schaft oder ggf. zumindest bereichsweise als hohler Schaft ausgebildete Feder bzw. die wenigstens eine Schraubenfeder kann zwischen der Aufhängung und dem jeweiligen Greifmittel positioniert sein. Insbesondere kann es sein, dass die wenigstens eine massiv ausgebildete oder zumindest bereichsweise als hohler Schaft ausgebildete Feder bzw. die wenigstens eine Schraubenfeder zwischen der Aufhängung und einem jeweiligen vorhergehend bereits beschriebenen eigenen Flansch positioniert bzw. angeordnet ist.

Weiter kann die Greifeinrichtung wenigstens eine Linearführung umfassen, über welche wenigstens eine Linearführung das mindestens eine Greifmittel an der Aufhängung angeordnet ist.

Wahlweise kann jedem Greifmittel der Greifeinrichtung eine eigene Linearführung zugeordnet sein, über welche das jeweilige Greifmittel an der Aufhängung festgesetzt ist.

Eine jeweilige Linearführung kann bspw. eine Buchse umfassen. Die jeweilige Buchse und die Aufhängung können ggf. einstückig ausgebildet sein. Weiter können der vorhergehend bereits beschriebene jeweilige Flansch und eine jeweilige Buchse gemeinsam eine jeweilige Linearführung bilden. Es ist hierbei vorstellbar, dass der jeweilige Flansch relativ zur jeweiligen Buchse in linearer Richtung hin- und herbewegbar ist. Der jeweilige Flansch kann hierbei zumindest bereichsweise innerhalb der jeweiligen Buchse angeordnet sein.

Es kann sein, dass die wenigstens eine zumindest bereichsweise als hohler Schaft ausgebildete Feder wenigstens eine Schraubenfeder ist und dass die wenigstens eine Schraubenfeder mit ihren Windungen zumindest abschnittsweise um die wenigstens eine Linearführung geführt ist. Insbesondere kann hierbei vorgesehen sein, dass die wenigstens eine zumindest bereichsweise als hohler Schaft ausgebildet Feder wenigstens eine Schraubenfeder ist und dass die wenigstens eine Schraubenfeder mit ihren Windungen zumindest abschnittsweise um mindestens eine als Bestandteil der wenigstens einen Linearführung ausgebildete und vorhergehend bereits erwähnte Buchse geführt ist.

Es kann sein, dass die gemäß der oben schon erläuterten Ausführungsvariante wenigstens eine zumindest bereichsweise als massiver Schaft ausgebildete Feder wenigstens eine Schraubenfeder ist und dass die wenigstens eine Schraubenfeder mit ihren Windungen zumindest abschnittsweise um die wenigstens eine Linearführung geführt ist. Insbesondere kann hierbei vorgesehen sein, dass die wenigstens eine zumindest bereichsweise als massiver Schaft ausgebildet Feder wenigstens eine Schraubenfeder ist und dass die wenigstens eine Schraubenfeder mit ihren Windungen zumindest abschnittsweise um mindestens eine als Bestandteil der wenigstens einen Linearführung ausgebildete und vorhergehend bereits erwähnte Buchse geführt ist.

Denkbar ist auch, dass die Aufhängung und die wenigstens eine Feder einstückig ausgebildet sind oder dass die Aufhängung und die wenigstens eine Feder sowie wenigstens eine als Bestandteil der wenigstens einen Linearführung ausgebildete Buchse bzw. feststehende Buchse einstückig ausgebildet sind.

Weiter ist denkbar, dass die Aufhängung, die wenigstens eine Feder und/oder die wenigstens eine Linearführung im dreidimensionalen Druckverfahren, d.h. in der Regel durch ein Lasersinterverfahren hergestellt sind. Denkbar ist auch, dass die Greifeinrichtung mit sämtlichen Bestandteilen im dreidimensionalen Druckverfahren, d.h. im Lasersinterverfahren oder in einem ähnlichen Herstellungsverfahren hergestellt ist.

In diversen Ausführungsformen kann die Greifeinrichtung wenigstens eine erste Feder umfassen. Über die wenigstens eine erste Feder kann mindestens ein erstes Greifmittel, welches einen Getränkebehälter über Druckluft (Unterdruck oder Überdruck) entgegennehmen kann, an der Aufhängung angeordnet sein. Die wenigstens eine erste Feder kann zumindest bereichsweise als hohler Schaft ausgebildet sein, über welchen hohlen Schaft das mindestens eine erste Greifmittel zur Entgegennahme des Getränkebehälters mit Druckluft (Unterdruck oder Überdruck) beaufschlagbar ist.

Zudem kann die Greifeinrichtung wenigstens eine zweite Feder umfassen, über welche mindestens ein zweites Greifmittel, welches einen Getränkebehälter über Druckluft (Unterdruck oder Überdruck) entgegennehmen kann, an der Aufhängung angeordnet ist, welche wenigstens eine zweite Feder zumindest bereichsweise als hohler Schaft ausgebildet ist, über welchen hohlen Schaft das mindestens eine zweite Greifmittel zur Entgegennahme des Getränkebehälters mit Druckluft (Unterdruck oder Überdruck) beaufschlagbar ist.

Es kann hierbei vorgesehen sein, dass die wenigstens eine erste zumindest bereichsweise als hohler Schaft ausgebildete Feder und die wenigstens eine zweite zumindest bereichsweise als hohler Schaft ausgebildete Feder in einen gemeinsamen Anschlussbereich münden. Der gemeinsame Anschlussbereich kann durch die Aufhängung ausgebildet sein. An der Aufhängung kann ein Anschlussstück festgesetzt bzw. angeordnet sein, welches einen Unterdruck oder Überdruck auf den durch die Aufhängung ausgebildeten Anschlussbereich übertragen kann.

Wie erwähnt, kann die Greifeinrichtung wenigstens eine erste Feder umfassen. Über die wenigstens eine erste Feder kann mindestens ein erstes Greifmittel, welches einen Getränkebehälter über geeignete Aktuatorik (z.B. mechanisch, elektromagnetisch, piezoelektrisch, elektromotorisch etc.) entgegennehmen kann, an der Aufhängung angeordnet sein. Die wenigstens eine erste Feder kann zumindest bereichsweise als massiver und/oder als leitungsführender Schaft ausgebildet sein, über welchen Schaft das mindestens eine erste Greifmittel zur Entgegennahme des Getränkebehälters mit Energie und/oder mit passenden Ansteuersignalen beaufschlagbar ist.

Zudem kann die Greifeinrichtung wenigstens eine zweite Feder umfassen, über welche mindestens ein zweites Greifmittel, welches einen Getränkebehälter über eine geeignete Mechanik bzw. Aktuatorik (z.B. mechanisch, elektromagnetisch, piezoelektrisch, elektromotorisch etc.) greifen, aufnehmen und/oder entgegennehmen kann, an der Aufhängung angeordnet ist, welche wenigstens eine zweite Feder zumindest bereichsweise als massiver und/oder als leitungsführender Schaft ausgebildet ist, über welchen massiven und/oder leitungsführenden Schaft das mindestens eine zweite Greifmittel zur Entgegennahme des Getränkebehälters mit Energie und/oder mit passenden Ansteuersignalen beaufschlagbar ist.

Es kann bei dieser hier beschriebenen alternativen Ausführungsvariante ohne druckluftbasierte Ansteuerung vorgesehen sein, dass die wenigstens eine erste zumindest bereichsweise als massiver und/oder leitungsführender Schaft ausgebildete Feder und die wenigstens eine zweite zumindest bereichsweise als massiver und/oder leitungsführender Schaft ausgebildete Feder in einen gemeinsamen Anschlussbereich münden. Der gemeinsame Anschlussbereich kann durch die Aufhängung ausgebildet sein. An der Aufhängung kann ein Anschlussstück festgesetzt bzw. angeordnet sein, welches elektrische oder andere Signale auf den durch die Aufhängung ausgebildeten Anschlussbereich übertragen kann.

Vorstellbar ist auch, dass die Greifeinrichtung über wenigstens eine elektrische Leitungsverbindung verfügt. Hierbei kann es sein, dass die wenigstens eine elektrische Leitungsverbindung zumindest abschnittsweise in der wenigstens einen Feder aufgenommen ist, welche wenigstens eine Feder zumindest bereichsweise als hohler Schaft ausgebildet ist, über welchen hohlen Schaft das mindestens eine Greifmittel zur Entgegennahme des Getränkebehälters mit Druckluft beaufschlagt werden kann. So ist denkbar, dass elektrische Leitungen, Kabelverbindungen, elektrische Anschlüsse etc. zur elektrischen Stromversorgung, Ansteuerung der Greifmittel etc. zumindest abschnittweise in der wenigstens einen als hohler Schaft ausgebildeten Feder aufgenommen sind.

Weiterhin ist ebenso vorstellbar, dass die Greifeinrichtung über wenigstens eine hydraulische Leitungsverbindung verfügt. Hierbei kann es sein, dass die wenigstens eine hydraulische Leitungsverbindung zumindest abschnittweise in der wenigstens einen Feder aufgenommen ist, welche wenigstens eine Feder zumindest bereichsweise als hohler Schaft ausgebildet ist, über welchen hohlen Schaft das mindestens eine Greifmittel zur Entgegennahme des Getränkebehälters mit Druckluft beaufschlagt werden kann. So kann die wenigstens eine hydraulische Leitungsverbindung und/oder wenigstens eine Hydraulikkomponente wie Zylinder, Druckbehälter etc. zur Betätigung der Greifmittel etc. zumindest abschnittweise in der wenigstens einen als hohler Schaft ausgebildeten Feder aufgenommen sein.

Außerdem ist es vorstellbar, dass die Greifeinrichtung über wenigstens eine sensorische Komponente verfügt. Hierbei kann es sein, dass die wenigstens eine sensorische Komponente zumindest abschnittsweise in der wenigstens einen Feder aufgenommen ist, welche wenigstens eine Feder zumindest bereichsweise als hohler Schaft ausgebildet ist, über welchen hohlen Schaft das mindestens eine Greifmittel zur Entgegennahme des Getränkebehälters mit einer sensorischen Komponente ausgebildet sein kann. So ist denkbar, dass Sensoren oder andere sensorische Komponenten für signalausgebende Funktionen etc. zumindest abschnittweise in der wenigstens einen als hohler Schaft ausgebildeten Feder aufgenommen sind.

Auch ist denkbar, dass das Anschlussstück als einstückiger Bestandteil der Aufhängung ausgebildet und ggf. zusammen mit der Aufhängung im dreidimensionalen Druckverfahren hergestellt ist.

Weiter kann das mindestens eine Greifmittel abnehmbar an der wenigstens einen Feder und/oder an der wenigstens einen Linearführung angeordnet sein. Auch kann es sein, dass das mindestens eine Greifmittel, die Aufhängung und/oder die wenigstens eine Feder einstückig ausgebildet und ggf. im dreidimensionalen Druckverfahren hergestellt sind.

Die Erfindung betrifft darüber hinaus ein Verfahren zum Herstellen einer zur Entgegennahme von Getränkebehältern ausgebildeten Greifeinrichtung. Merkmale, welche vorhergehend bereits zu diversen Ausführungsformen der Greifeinrichtung beschrieben wurden, können ebenso für nachfolgend beschriebene Ausführungsformen des Verfahrens vorgesehen sein und werden nicht mehrfach erwähnt. Weiter können nachfolgend beschriebene Merkmale, welche diverse Ausführungsformen des Verfahrens betreffen, bei vorhergehend bereits beschriebenen Ausführungsformen einer Greifeinrichtung vorgesehen sein.

Die Greifeinrichtung, welches mittels des Verfahrens hergestellt wird, umfasst gemäß einer ersten Ausführungsvariante mindestens folgende Bestandteile:
- eine Aufhängung, mindestens ein zur Entgegennahme von Getränkebehältern mittels Druckluft (Unterdruck oder Überdruck) ausgebildetes Greifmittel, wenigstens eine fluidische Leitungsverbindung zur Weitergabe eines Unterdrucks oder Überdrucks an das mindestens eine zur Entgegennahme von Getränkebehältern ausgebildete Greifmittel sowie wenigstens eine Feder, über welche wenigstens eine Feder das mindestens eine zur Entgegennahme von Getränkebehältern mittels Druckluft (Unterdruck oder Überdruck) ausgebildete Greifmittel mit der Aufhängung in Verbindung steht.

Ein Schritt des Verfahrens sieht ein Zusammensetzen und/oder Fertigen der Bestandteile der Greifeinrichtung vor, so dass hieraus resultierend die Greifeinrichtung hergestellt ist.

Es ist vorgesehen, dass die wenigstens eine Feder zumindest bereichsweise als hohler Schaft oder als Hohlrohr, d.h. als gewendeltes oder regelmäßig gekrümmtes Hohlrohr gefertigt wird, welcher zumindest bereichsweise hohle Schaft der wenigstens einen Feder die wenigstens eine fluidische Leitungsverbindung zur Weitergabe eines Unterdrucks oder Überdrucks an das mindestens eine zur Entgegennahme von Getränkebehältern ausgebildete Greifmittel bereitstellt.

Die Greifeinrichtung, welches mittels des Verfahrens hergestellt wird, umfasst gemäß einer zweiten oder alternativen Ausführungsvariante zumindest folgende Bestandteile:
- eine Aufhängung, mindestens ein zur Entgegennahme von Getränkebehältern mittels geeigneter Ansteuerung (z.B. mechanisch, elektromagnetisch, piezoelektrisch, elektromotorisch etc.) ausgebildetes Greifmittel, wenigstens eine Leitungsverbindung zur Weiterleitung elektrischer Signale an das mindestens eine zur Entgegennahme von Getränkebehältern ausgebildete und entsprechend ansteuerbare Greifmittel sowie wenigstens eine Feder, über welche wenigstens eine Feder das mindestens eine zur Entgegennahme von Getränkebehältern mittels geeigneter Aktuatorik (s.o.) ausgebildete Greifmittel mit der Aufhängung in Verbindung steht.

Ein Schritt des alternativen Verfahrens sieht ein Zusammensetzen und/oder Fertigen der Bestandteile der Greifeinrichtung vor, so dass hieraus resultierend die Greifeinrichtung hergestellt ist.

Es ist vorgesehen, dass die wenigstens eine Feder zumindest bereichsweise als massiver und/oder als leitungsführender Schaft, d.h. als gewendelter oder regelmäßig gekrümmter Schaft gefertigt wird, welcher zumindest bereichsweise massive Schaft der wenigstens einen Feder die wenigstens eine Steuer- und/oder Leitungsverbindung zur Weitergabe von Ansteuersignalen an das mindestens eine zur Entgegennahme von Getränkebehältern ausgebildete Greifmittel bereitstellt.

In diversen Ausführungsformen kann es sein, dass sämtliche Bestandteile der Greifeinrichtung im dreidimensionalen Druckverfahren gefertigt werden. Es kann sein, dass die Greifeinrichtung mit sämtlichen Bestandteilen im dreidimensionalen Druckverfahren gefertigt wird, so dass zeitlich unmittelbar nach Abschluss des dreidimensionalen Druckverfahrens die Greifeinrichtung hergestellt ist. Bei derartigen Ausführungsformen ist es nicht notwendig, dass einzelne Bestandteile der Greifeinrichtung nach Abschluss des dreidimensionalen Druckverfahrens zusammengesetzt werden. In weiteren Ausführungsformen kann es sein, dass mehrere Bestandteile der Greifeinrichtung im dreidimensionalen Druckverfahren hergestellt werden und mit weiteren Bestandteilen der Greifeinrichtung zeitlich nach Abschluss des dreidimensionalen Druckverfahrens zusammengesetzt werden.

Es kann sein, dass die Aufhängung und die wenigstens eine Feder einstückig und aus Kunststoff gefertigt werden. Auch kann es sein, dass die Aufhängung und die wenigstens eine Feder sowie wenigstens eine Buchse, welche als Bestandteil wenigstens einer für das mindestens eine Greifmittel vorgesehenen Linearführung ausgebildet ist, einstückig und aus Kunststoff gefertigt werden. Weiter ist denkbar, dass die Aufhängung und die wenigstens eine Feder sowie wenigstens eine für das mindestens eine Greifmittel vorgesehene Linearführung vollständig aus Kunststoff und ggf. im dreidimensionalen Druckverfahren gefertigt werden.

Bewährt haben sich zudem Ausführungsformen, bei welchen die Aufhängung und die wenigstens eine Feder einstückig und aus Kunststoff im dreidimensionalen Druckverfahren gefertigt werden. Auch haben sich Ausführungsformen bewährt, bei welchen die Aufhängung und die wenigstens eine Feder sowie wenigstens eine Buchse, welche als Bestandteil wenigstens einer für das mindestens eine Greifmittel vorgesehenen Linearführung ausgebildet ist, einstückig und aus Kunststoff im dreidimensionalen Druckverfahren gefertigt werden. Die wenigstens eine Feder kann als Schraubenfeder mit drei oder mehr Windungen gefertigt werden. D.h., die wenigstens eine Feder kann als Schraubenfeder gefertigt werden, welche eine Windungszahl n besitzt, wobei gilt: n ≥ 3.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsform einer erfindungsgemäßen Greifeinrichtung.
Fig. 2 zeigt einen schematischen Querschnitt durch eine Ausführungsform einer erfindungsgemäßen Greifeinrichtung.
Fig. 3 zeigt im Flussdiagramm einzelne Schritte, wie sie bei diversen Ausführungsformen eines erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Greifeinrichtung ein besseres Verständnis für den in den Ansprüchen sowie im allgemeinen Teil der Beschreibung allgemeiner und/oder abstrakter formulierten Erfindungsgedanken abzuleiten.

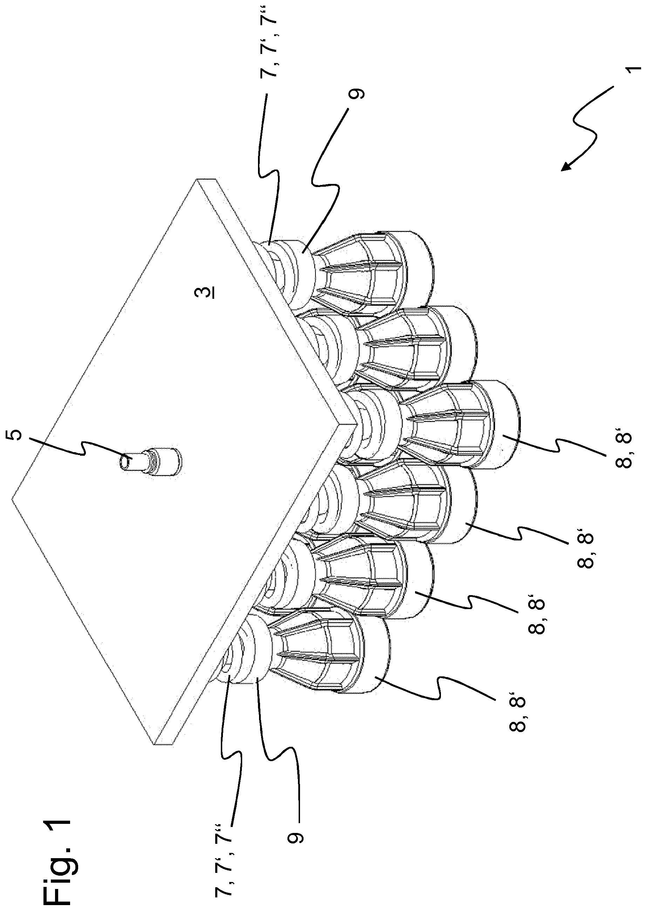

Die Fig. 1 zeigt eine schematische Perspektivansicht einer Ausführungsform einer erfindungsgemäßen Greifeinrichtung 1. Die Greifeinrichtung 1 aus dem Ausführungsbeispiel nach Fig. 1 ist zur Entgegennahme von Getränkebehältern vorgesehen, die bspw. durch Glasflaschen oder PET-Flaschen ausgebildet sein können.

Die Greifeinrichtung 1 besitzt eine Aufhängung 3, von welcher Aufhängung 3 ein Anschlussstück 5 in Richtung nach oben absteht. An das Anschlussstück 5 kann eine Einrichtung zur Erzeugung eines pneumatischen Unterdrucks gekoppelt werden.

Weiter umfasst die Greifeinrichtung 1 mehrere Greifmittel 8, die jeweils als Greiftulpe 8' ausgebildet sind und jeweils einen Getränkebehälter bzw. eine Glasflasche oder PET-Flasche mittels Druckluft (Unterdruck oder Überdruck) entgegennehmen können. Der Unterdruck oder Überdruck wird hierbei über das Anschlussstück 5 auf die Greifmittel 8 bzw. auf die Greiftulpen 8' übertragen.

Um mehrere Getränkebehälter bzw. mehrere Glasflaschen oder PET-Flaschen entgegenzunehmen, wird die Greifeinrichtung 1 zunächst in Richtung von oben kommend auf die jeweiligen mehreren Getränkebehälter aufgesetzt, wobei die mehreren Getränkebehälter abschnittsweise in die als Greiftulpen 8' ausgebildeten Greifmittel 8 eintauchen.

Um zu vermeiden, dass die jeweiligen entgegenzunehmenden Getränkebehälter und/oder die Greifeinrichtung 1 hierbei beschädigt werden, sind die Greifmittel 8 bzw. Greiftulpen 8' jeweils federnd gelagert. Die Bezugsziffer 7 verweist in Fig. 1 auf eine jeweilige Feder, über welche ein jeweiliges Greifmittel 8 bzw. eine jeweilige Greiftulpe 8' mit der Aufhängung 3 in Verbindung steht. Für jedes Greifmittel 8 bzw. für jede Greiftulpe 8' ist somit eine eigene Feder 7 vorgesehen, welche das jeweilige Greifmittel 8 bzw. die jeweilige Greiftulpe 8' an der Aufhängung 3 festsetzt. Im Ausführungsbeispiel aus Fig. 1 sind die Federn 7 jeweils als Schraubenfeder 7' ausgebildet.

Wie zuvor bereits erwähnt, werden die Greifmittel 8 bzw. Greiftulpen 8' mit Druckluft (Unterdruck oder Überdruck) angesteuert, wozu fluidische Leitungsverbindungen erforderlich sind, welche den jeweiligen Unterdruck oder Überdruck (d.h. das Medium "Druckluft") auf das jeweilige Greifmittel 8 bzw. auf die jeweilige Greiftulpe 8' übertragen.

Bei aus dem Stand der Technik bekannten Greifeinrichtungen sind diese fluidischen Leitungsverbindungen in ungünstiger Weise außen liegend bzw. als separate Bestandteile der jeweiligen Greifeinrichtung ausgebildet. Wird eine solche Greifeinrichtung gefertigt, so müssen die fluidischen Leitungsverbindungen jeweils an den Greifmitteln 8 bzw. Greiftulpen 8' festgesetzt werden, womit ein hoher Aufwand bei einer Fertigung bzw. einer Zusammensetzung der einzelnen Bestandteile einer Greifeinrichtung einhergeht. Werden mit solchen aus dem Stand der Technik bekannten Greifeinrichtungen Getränkebehälter entgegengenommen und in Richtung eines Zielortes bewegt, so kann es hierbei sein, dass sich die außen liegenden pneumatischen Leitungsverbindungen ungewollt an einem entlang eines Verbringungsweges der Greifeinrichtung befindlichen Hindernis verhaken, wodurch die Greifeinrichtung ggf. beschädigt werden kann.

Bei der Greifeinrichtung 1 aus dem Ausführungsbeispiel nach Fig. 1 sind die Federn 7 bzw. die Schraubenfedern 7' jeweils als hohler Schaft 7" ausgebildet, welcher hohle Schaft 7" einen Unterdruck oder Überdruck an die Greifmittel 8 bzw. an die Greiftulpen 8" übertragen kann. Sämtliche jeweils als hohler Schaft 7" ausgebildeten Federn 7 münden in einen gemeinsamen Anschlussbereich, an welchen gemeinsamen Anschlussbereich das Anschlussstück 5 gekoppelt ist. Der gemeinsame Anschlussbereich wird von der Aufhängung 3 ausgebildet bzw. durch die Aufhängung 3 bereitgestellt.

Ausgehend vom Anschlussstück 5 kann daher zur Entgegennahme von Getränkebehältern über die jeweils als hohler Schaft 7" ausgebildeten Federn 7 ein Unterdruck oder Überdruck auf die Greifmittel 8 bzw. die Greiftulpen 8' übertragen werden. Die Federn 7 dienen daher sowohl der federnden Lagerung der Greifmittel 8 bzw. der Greiftulpen 8' an der Aufhängung 3 als auch der Übertragung bzw. der Weitergabe eines Unterdrucks oder Überdrucks vom Anschlussstück 5 an die Greifmittel 8 bzw. Greiftulpen 8'.

Bei dem Ausführungsbeispiel nach Fig. 1 sind die Aufhängung 3 sowie sämtliche Federn 7 einstückig aus Kunststoff im dreidimensionalen Druckverfahren hergestellt, womit insbesondere ein Lasersinterverfahren oder ein ähnliches Herstellungsverfahren gemeint ist. Eine Fertigung der Greifeinrichtung 1 kann daher einfach und mit geringem Zeitaufwand erfolgen.

Die Greifmittel 8 bzw. Greiftulpen 8' sind auf einen jeweiligen Flansch 9 aufgesteckt und können vom jeweiligen Flansch 9 abgenommen werden. Für weitere Ausführungsformen ist darüber hinaus vorstellbar, dass der jeweilige Flansch 9 und/oder das Anschlussstück 5 und/oder die Greifmittel 8 bzw. Greiftulpen 8' zusätzlich zu den Federn 7 und der Aufhängung 3 aus Kunststoff im dreidimensionalen Druckverfahren hergestellt sind.

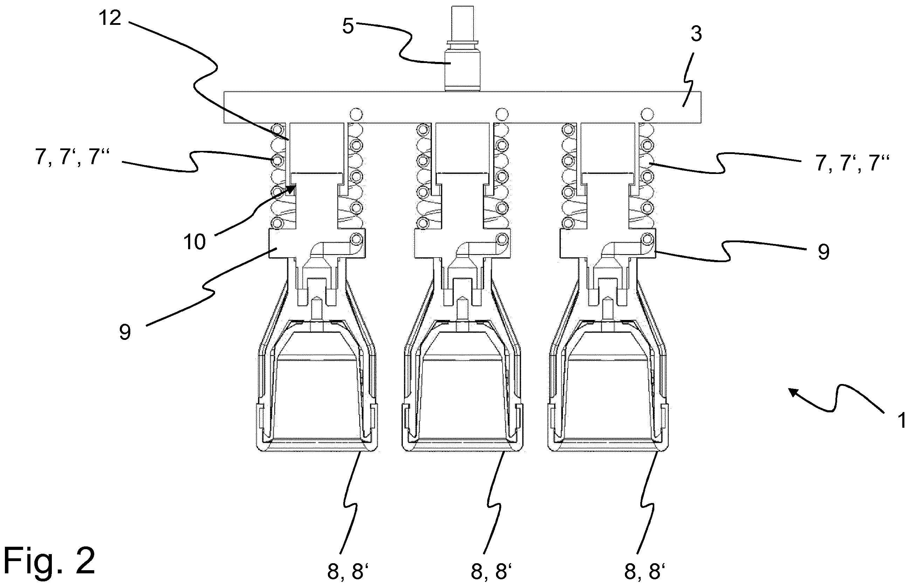

Die Fig. 2 zeigt einen schematischen Querschnitt durch eine Ausführungsform einer erfindungsgemäßen Greifeinrichtung 1. Von der Ausführungsform nach Fig. 1 unterscheidet sich die Greifeinrichtung 1 nach Fig. 2 in der Anzahl an Greifmitteln 8 bzw. Greiftulpen 8 sowie in der Anzahl an Windungen, welche eine das jeweilige Greifmittel 8 bzw. die jeweilige Greiftulpe 8' mit der Aufhängung 3 verbindende Feder 7 aufweist. Die Anzahl an Windungen einer jeweiligen Feder 7 der Greifeinrichtung 1 nach Fig. 2 ist gegenüber der Anzahl an Windungen einer jeweiligen Feder 7 der Greifeinrichtung 1 nach Fig. 1 vergrößert ausgebildet. Sowohl eine jeweilige Feder 7 der Greifeinrichtung 1 nach Fig. 1 als auch eine jeweilige Feder 7 der Greifeinrichtung 1 nach Fig. 2 besitzt eine Windungszahl n, für welche gilt: n ≥ 3.

Die Greifeinrichtung 1 nach Fig. 2 besitzt für jedes der Greifmittel 8 bzw. für jede der Greiftulpen 8' eine Linearführung 10, welche einen Flansch 9 und eine Buchse 12 umfasst. An einem jeweiligen Flansch 9 ist ein jeweiliges Greifmittel 8 bzw. eine jeweilige Greiftulpe 8' abnehmbar aufgesteckt. Der jeweilige Flansch 9 ist zusammen mit dem jeweiligen aufgesteckten Greifmittel 8 bzw. zusammen mit der jeweiligen aufgesteckten Greiftulpe 8' gegen die Kraft einer jeweiligen Feder 7 linear in der jeweiligen Buchse 12 hin- und herbewegbar.

Um einen Unterdruck oder Überdruck vom Anschlussstück 5 an die Greifmittel 8 bzw. Greiftulpen 8' zu übertragen, sind die Federn 7 bzw. die Schraubfedern 7' jeweils als hohler Schaft 7" ausgebildet und stehen jeweils mit dem Anschlussstück 5 und einem jeweiligen Greifmittel 8 bzw. einer jeweiligen Greiftulpe 8' fluidisch in Verbindung. Durch die schematische Darstellung der Fig. 2 wird hierbei verdeutlicht, dass ein Unterdruck oder Überdruck vom Anschlussstück über die Federn 7 sowie den jeweiligen Flansch 9 an das jeweilige Greifmittel 8 bzw. an die jeweilige Greiftulpe 8' weitergegeben werden kann, woraufhin ein jeweiliger Getränkebehälter an einem jeweiligen Greifmittel 8 bzw. an einer jeweiligen Greiftulpe 8' lösbar festgesetzt ist.

In Fig. 2 ist ein jeweiliges Greifmittel 8 bzw. eine jeweilige Greiftulpe 8' auf einen jeweiligen als Bestandteil einer jeweiligen Linearführung 10 ausgebildeten Flansch 9 aufgesteckt und hierdurch lösbar mit dem jeweiligen Flansch 9 verbunden. Für diverse weitere Ausführungsformen ist denkbar, dass die Greifmittel 8 bzw. die Greiftulpen 8' zusammen mit dem jeweiligen Flansch 9, der jeweiligen Buchse 12, der jeweiligen Feder 7, der Aufhängung 3 und/oder dem Anschlussstück 5 im dreidimensionalen Druckverfahren hergestellt sind bzw. im dreidimensionalen Druckverfahren hergestellt werden.

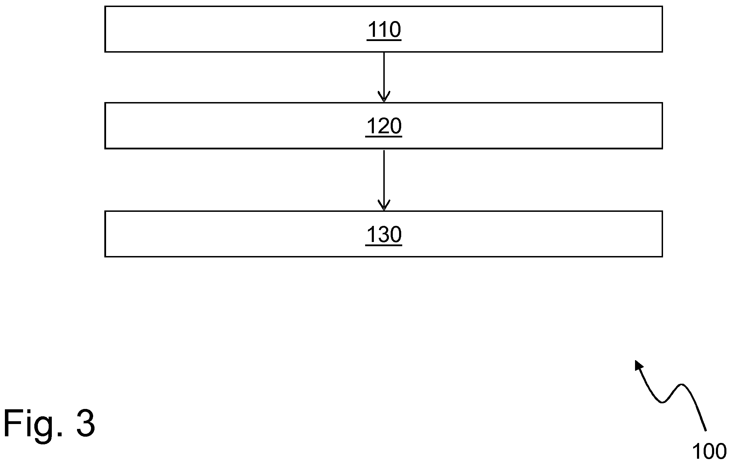

Die Fig. 3 zeigt im Flussdiagramm einzelne Schritte, wie sie bei diversen Ausführungsformen eines erfindungsgemäßen Verfahrens 100 vorgesehen sein können. Mittels des Verfahrens nach Fig. 3 können eine Greifeinrichtung 1 entsprechend dem Ausführungsbeispiel nach Fig. 1 sowie eine Greifeinrichtung 1 entsprechend dem Ausführungsbeispiel nach Fig. 2 hergestellt werden.

Im Rahmen eines ersten Schrittes 110 werden eine Aufhängung 3, mehrere Federn 7 und für jede der mehreren Federn 7 eine jeweilige Linearführung 10, welche jeweilige Linearführung 10 eine Buchse 12 und einen in der Buchse 12 beweglichen Flansch 9 besitzt, im dreidimensionalen Druckverfahren gefertigt. Die Federn 7 werden hierbei derart gefertigt, dass diese jeweils einen hohlen Schaft 7" ausbilden und in einen gemeinsamen und durch die Aufhängung 3 bereitgestellten Anschlussbereich münden.

Im Schritt 120 wird auf jeden Flansch 9 ein zur Entgegennahme eines jeweiligen Getränkebehälters mittels Unterdruck ausgebildete Greifmittel 8 aufgesteckt. Nach Aufstecken eines jeweiligen Greifmittels 8 auf einen jeweiligen Flansch 9 steht mit jedem Greifmittel 8 eine jeweilige als hohler Schaft 7" ausgebildete Feder 7 fluidisch in Verbindung, so dass die Greifmittel 8 über die jeweilige als hohler Schaft 7" ausgebildete Feder 7 zur Entgegennahme eines jeweiligen Getränkebehälters mit Unterdruck beaufschlagbar sind. Die jeweilige Feder 7 bildet somit eine fluidische Leitungsverbindung aus, über welchen das jeweilige Greifmittel 8 mit Unterdruck beaufschlagt werden kann bzw. über welche an das jeweilige Greifmittel 8 ein Unterdruck weitergeleitet werden kann.

Im Schritt 130 wird ein bereits in Figuren 1 und 2 jeweils dargestelltes Anschlussstück 5 an der Aufhängung 3 im Bereich des Anschlussbereichs angebracht. Über das Anschlussstück 5 sowie die jeweils als hohler Schaft 7" ausgebildeten Federn 7 können die Greifmittel 8 sodann zur Entgegennahme eines jeweiligen Getränkebehälters mit Unterdruck beaufschlagt werden.

### Bezugszeichenliste

- 1: Greifeinrichtung
- 3: Aufhängung
- 5: Anschlussstück
- 7: Feder
- 7': Schraubenfeder
- 7": hohler Schaft
- 8: Greifmittel
- 8': Greiftulpe
- 9: Flansch
- 10: Linearführung
- 12: Buchse

- 100: Verfahren
- 110: erster Verfahrensschritt
- 120: zweiter Verfahrensschritt
- 130: dritter Verfahrensschritt

## Patentansprüche

1. Greifeinrichtung (1) für Getränkebehälter, umfassend
- eine Aufhängung (3),
- mindestens ein Greifmittel (8), welches einen Getränkebehälter durch Druckluft entgegennehmen kann,
- wenigstens eine Feder (7), über welche das mindestens eine Greifmittel (8) mit der Aufhängung (3) in Verbindung steht, **dadurch gekennzeichnet, dass**
die wenigstens eine Feder (7) wenigstens eine Schraubenfeder (7') ist und zumindest bereichsweise als hohler Schaft (7") ausgebildet ist, über welchen hohlen Schaft (7") das mindestens eine Greifmittel (8) zur Entgegennahme des Getränkebehälters mit Druckluft beaufschlagbar ist.

2. Greifeinrichtung nach Anspruch 1, bei welcher die wenigstens eine zumindest bereichsweise als hohler Schaft (7") ausgebildete Feder (7) wenigstens eine Schraubenfeder (7') ist, die drei oder mehr Windungen aufweist.

3. Greifeinrichtung nach Anspruch 1 oder Anspruch 2 umfassend wenigstens eine Linearführung (10), über welche wenigstens eine Linearführung (10) das mindestens eine Greifmittel (8) an der Aufhängung (3) angeordnet ist.

4. Greifeinrichtung nach Anspruch 3, bei welcher die wenigstens eine Schraubenfeder (7') mit ihren Windungen zumindest abschnittsweise um die wenigstens eine Linearführung (10) geführt ist.

5. Greifeinrichtung nach einem der Ansprüche 1 bis 4, bei welcher
- die Aufhängung (3) und die wenigstens eine Feder (7) einstückig ausgebildet sind, oder bei welcher
- die Aufhängung (3) und die wenigstens eine Feder (7) sowie wenigstens eine als Bestandteil der wenigstens einen Linearführung (10) ausgebildete feststehende Buchse (12) einstückig ausgebildet sind.

6. Greifeinrichtung nach einem der Ansprüche 1 bis 5, bei welcher die Aufhängung (3), die wenigstens eine Feder (7) und/oder die wenigstens eine Linearführung (10) im dreidimensionalen Druckverfahren hergestellt sind.

7. Greifeinrichtung nach Anspruch 6, bei welcher
- die Aufhängung (3) und die wenigstens eine Feder (7) einstückig im dreidimensionalen Druckverfahren hergestellt sind, oder bei welcher
- die Aufhängung (3) und die wenigstens eine Feder (7) sowie wenigstens eine als Bestandteil der wenigstens einen Linearführung (10) ausgebildete feststehende Buchse (12) vorzugsweise einstückig und im dreidimensionalen Druckverfahren hergestellt sind.

8. Greifeinrichtung nach einem der Ansprüche 1 bis 7, umfassend
- wenigstens eine erste Feder (7), über welche mindestens ein erstes Greifmittel (8), welches einen Getränkebehälter über Druckluft entgegennehmen kann, an der Aufhängung (3) angeordnet ist und welche wenigstens eine erste Feder (7) zumindest bereichsweise als hohler Schaft (7") ausgebildet ist, über welchen hohlen Schaft (7") das mindestens eine erste Greifmittel (8) zur Entgegennahme des Getränkebehälters mit Druckluft beaufschlagbar ist, und umfassend
- wenigstens eine zweite Feder (7), über welche mindestens ein zweites Greifmittel (8), welches einen Getränkebehälter über Druckluft entgegennehmen kann, an der Aufhängung (3) angeordnet ist und welche wenigstens eine zweite Feder (7) zumindest bereichsweise als hohler Schaft (7") ausgebildet ist, über welchen hohlen Schaft (7") das mindestens eine zweite Greifmittel (8) zur Entgegennahme des Getränkebehälters mit Druckluft beaufschlagbar ist, und wobei vorgesehen ist, dass
die wenigstens eine erste zumindest bereichsweise als hohler Schaft (7") ausgebildete Feder (7) und die wenigstens eine zweite zumindest bereichsweise als hohler Schaft (7") ausgebildete Feder (7) in einen gemeinsamen Anschlussbereich münden.

9. Greifeinrichtung nach Anspruch 8, bei welcher der gemeinsame Anschlussbereich durch die Aufhängung (3) ausgebildet ist.

10. Greifeinrichtung nach Anspruch 9, bei welcher am gemeinsamen Anschlussbereich ein Anschlussstück (5) festgesetzt ist.

11. Greifeinrichtung nach einem der Ansprüche 1 bis 10, bei welcher das mindestens eine Greifmittel (8) abnehmbar an der wenigstens einen Feder (7) und/oder an der wenigstens einen Linearführung (10) angeordnet ist.

12. Verfahren (100) zum Herstellen einer zur Entgegennahme von Getränkebehältern ausgebildeten Greifeinrichtung (1), welche mindestens folgende Bestandteile umfasst:
- eine Aufhängung (3), mindestens ein zur Entgegennahme von Getränkebehältern mittels Druckluft ausgebildetes Greifmittel (8), wenigstens eine fluidische Leitungsverbindung zur Weitergabe eines Über- oder Unterdrucks an das mindestens eine zur Entgegennahme von Getränkebehältern ausgebildete Greifmittel (8) sowie wenigstens eine Feder (7), über welche wenigstens eine Feder (7) das mindestens eine zur Entgegennahme von Getränkebehältern mittels Druckluft ausgebildete Greifmittel (8) mit der Aufhängung (3) in Verbindung steht, das Verfahren umfassend folgende Schritte:
- Zusammensetzen und/oder Fertigen der Bestandteile der Greifeinrichtung (1), so dass hieraus resultierend die Greifeinrichtung (1) hergestellt ist, **gekennzeichnet dadurch dass**
- die wenigstens eine Feder (7) als wenigstens eine Schraubenfeder (7') und zumindest bereichsweise als hohler Schaft (7") gefertigt wird, welcher zumindest bereichsweise hohle Schaft (7") die wenigstens eine fluidische Leitungsverbindung zur Weitergabe eines Über- oder Unterdrucks an das mindestens eine zur Entgegennahme von Getränkebehältern ausgebildete Greifmittel (8) bereitstellt.

13. Verfahren nach Anspruch 12, bei welchem
- die Aufhängung (3) und die wenigstens eine Feder (7) einstückig und aus Kunststoff gefertigt werden oder bei welchem
- die Aufhängung (3) und die wenigstens eine Feder (7) sowie wenigstens eine Buchse (12), welche als Bestandteil wenigstens einer für das mindestens eine Greifmittel (8) vorgesehenen Linearführung (10) ausgebildet ist, einstückig und aus Kunststoff gefertigt werden.

14. Verfahren nach Anspruch 12 oder Anspruch 13, bei welchem
- die Aufhängung (3) und die wenigstens eine Feder (7) einstückig und aus Kunststoff im dreidimensionalen Druckverfahren gefertigt werden, oder bei welchem
- die Aufhängung (3) und die wenigstens eine Feder (7) sowie wenigstens eine Buchse (12), welche als Bestandteil wenigstens einer für das mindestens eine Greifmittel (8) vorgesehenen Linearführung (10) ausgebildet ist, einstückig und aus Kunststoff im dreidimensionalen Druckverfahren gefertigt werden.

## Claims

1. A gripping device (1) for beverage containers, the gripping device (1) comprising
- a suspension (3),
- at least one gripping means (8) that can receive a beverage container by means of compressed air,
- at least one spring (7) by way of which the at least one gripping means (8) is connected to the suspension (3), **characterised in that**
the at least one spring (7) is at least one coil spring (7') and is at least in some areas designed as a hollow shaft (7"), by way of which hollow shaft (7") the at least one gripping means (8) is chargeable with compressed air in order to receive the beverage container.

2. The gripping device according to claim 1, in which the at least one spring (7) that is at least in some areas designed as hollow shaft (7") is at least one coil spring (7') which has three or more turns.

3. The gripping device according to claim 1 or claim 2, comprising at least one linear guide (10), by way of which at least one linear guide (10) the at least one gripping means (8) is arranged at the suspension (3).

4. The gripping device according to claim 3, in which the at least one coil spring (7') is at least in some sections guided with its turns around the at least one linear guide (10).

5. The gripping device according to one of the claims 1 to 4, in which
- the suspension (3) and the at least one spring (7) are designed in one piece, or in which
- the suspension (3) and the at least one spring (7) as well as at least one stationary bearing (12) designed as a part of the at least one linear guide (10) are designed in one piece.

6. The gripping device according to one of the claims 1 to 5, in which the suspension (3), the at least one spring (7), and/or the at least one linear guide (10) are produced in a three-dimensional printing process.

7. The gripping device according to claim 6, in which
- the suspension (3) and the at least one spring (7) are produced in one piece in a three-dimensional printing process, or in which
- the suspension (3) and the at least one spring (7) as well as at least one stationary bearing (12) designed as a part of the at least one linear guide (10) are produced preferably in one piece and in a three-dimensional printing process.

8. The gripping device according to one of the claims 1 to 7, comprising
- at least one first spring (7) by way of which at least one first gripping means (8) that can receive a beverage container by means of compressed air is arranged at the suspension (3), and which at least one first spring (7) is at least in some areas designed as a hollow shaft (7"), by way of which hollow shaft (7") the at least one first gripping means (8) is chargeable with compressed air in order to receive the beverage container, and comprising
- at least one second spring (7) by way of which at least one second gripping means (8) that can receive a beverage container by means of compressed air is arranged at the suspension (3), and which at least one second spring (7) is at least in some areas designed as a hollow shaft (7"), by way of which hollow shaft (7") the at least one second gripping means (8) is chargeable with compressed air in order to receive the beverage container, and wherein it is provided that
the at least one first spring (7) designed at least in some areas as a hollow shaft (7") and the at least one second spring (7) designed at least in some areas as a hollow shaft (7") lead into a common connection area.

9. The gripping device according to claim 8, in which the common connection area is formed by the suspension (3).

10. The gripping device according to claim 9, in which a connection piece (5) is fixed to the common connection area.

11. The gripping device according to one of the claims 1 to 10, in which the at least one gripping means (8) is removably arranged at the at least one spring (7) and/or at the at least one linear guide (10).

12. A method (100) to produce a gripping device (1) designed to receive beverage containers, the gripping device (1) comprising at least the following parts:
- a suspension (3), at least one gripping means (8) designed to receive beverage containers by means of compressed air, at least one fluidic line connection for the transfer of a positive pressure or negative pressure to the at least one gripping means (8) designed to receive beverage containers, as well as at least one spring (7), by way of which at least one spring (7) the at least one gripping means (8) designed to receive beverage containers by means of compressed air is connected to the suspension (3), the method comprising the following steps:
- assembling and/or manufacturing the parts of the gripping device (1) such that as a result thereof the gripping device (1) is produced, **characterised in that**
- the at least one spring (7) is manufactured as at least one coil spring (7') and is at least in some areas manufactured as a hollow shaft (7"), which at least in some areas hollow shaft (7") provides the at least one fluidic line connection for the transfer of a positive pressure or negative pressure to the at least one gripping means (8) designed to receive beverage containers.

13. The method according to claim 12, in which
- the suspension (3) and the at least one spring (7) are manufactured in one piece and from plastic material, or in which
- the suspension (3) and the at least one spring (7) as well as at least one bearing (12) designed as a part of at least one linear guide (10) provided for the at least one gripping means (8) are manufactured in one piece and from plastic material.

14. The method according to claim 12 or claim 13, in which
- the suspension (3) and the at least one spring (7) are manufactured in one piece and from plastic material in a three-dimensional printing process, or in which
- the suspension (3) and the at least one spring (7) as well as at least one bearing (12) designed as a part of at least one linear guide (10) provided for the at least one gripping means (8) are manufactured in one piece and from plastic material in a three-dimensional printing process.

## Revendications

1. Dispositif de préhension (1) pour des récipients à boisson, comprenant
- une suspension (3),
- au moins un moyen de préhension (8) qui peut recevoir un récipient à boisson au moyen d'air comprimé,
- au moins un ressort (7) par l'intermédiaire duquel ledit au moins un moyen de préhension (8) est relié à la suspension (3), **caractérisé par le fait que**
ledit au moins un ressort (7) est au moins un ressort hélicoïdal (7') et est conçu, au moins par zones, en tant que tige creuse (7"), c'est par l'intermédiaire de laquelle tige creuse (7") que ledit au moins un moyen de préhension (8) peut être alimenté en air comprimé pour recevoir le récipient à boisson.

2. Dispositif de préhension selon la revendication 1, dans lequel ledit au moins un ressort (7) qui est conçu au moins par zones en tant que tige creuse (7") est au moins un ressort hélicoïdal (7') qui présente trois spires ou plus.

3. Dispositif de préhension selon la revendication 1 ou la revendication 2, comprenant au moins un guide linéaire (10), c'est par l'intermédiaire duquel au moins un guide linéaire (10) que ledit au moins un moyen de préhension (8) est disposé sur la suspension (3).

4. Dispositif de préhension selon la revendication 3, dans lequel ledit au moins un ressort hélicoïdal (7') avec ses spires est guidé au moins par zones autour dudit au moins un guide linéaire (10).

5. Dispositif de préhension selon l'une quelconque des revendications 1 à 4, dans lequel
- la suspension (3) et ledit au moins un ressort (7) sont formés d'un seul tenant, ou dans lequel
- la suspension (3) et ledit au moins un ressort (7) ainsi qu'au moins une douille (12) fixe qui est conçue en tant que composant dudit au moins un guide linéaire (10) sont formés d'un seul tenant.

6. Dispositif de préhension selon l'une quelconque des revendications 1 à 5, dans lequel la suspension (3), ledit au moins un ressort (7) et/ou ledit au moins un guide linéaire (10) sont fabriqués selon le procédé d'impression tridimensionnelle.

7. Dispositif de préhension selon a revendication 6, dans lequel
- la suspension (3) et ledit au moins un ressort (7) sont fabriqués d'un seul tenant selon le procédé d'impression tridimensionnelle, ou dans lequel
- la suspension (3) et ledit au moins un ressort (7) ainsi qu'au moins une douille (12) fixe qui est conçue en tant que composant dudit au moins un guide linéaire (10) sont fabriqués de préférence d'un seul tenant et selon le procédé d'impression tridimensionnelle.

8. Dispositif de préhension selon l'une quelconque des revendications 1 à 7, comprenant
- au moins un premier ressort (7) par l'intermédiaire duquel au moins un premier moyen de préhension (8) qui peut recevoir un récipient à boisson au moyen d'air comprimé est disposé sur la suspension (3), et lequel au moins un premier ressort (7) est conçu au moins par zones en tant que tige creuse (7"), c'est par l'intermédiaire de laquelle tige creuse (7") que ledit au moins un premier moyen de préhension (8) peut être alimenté en air comprimé pour recevoir le récipient à boisson, et comprenant
- au moins un deuxième ressort (7) par l'intermédiaire duquel au moins un deuxième moyen de préhension (8) qui peut recevoir un récipient à boisson au moyen d'air comprimé est disposé sur la suspension (3), et lequel au moins un deuxième ressort (7) est conçu au moins par zones en tant que tige creuse (7"), c'est par l'intermédiaire de laquelle tige creuse (7") que ledit au moins un deuxième moyen de préhension (8) peut être alimenté en air comprimé pour recevoir le récipient à boisson, et dans lequel il est prévu que
ledit au moins un premier ressort (7) qui est conçu au moins par zones en tant que tige creuse (7"), et ledit au moins un deuxième ressort (7) qui est conçu au moins par zones en tant que tige creuse (7") débouchent dans un zone de raccordement commune.

9. Dispositif de préhension selon la revendication 8, dans lequel la zone de raccordement commune est formée par la suspension (3).

10. Dispositif de préhension selon la revendication 9, dans lequel une pièce de raccordement (5) est fixée sur la zone de raccordement commune.

11. Dispositif de préhension selon l'une quelconque des revendications 1 à 10, dans lequel ledit au moins un moyen de préhension (8) est disposé de manière détachable sur ledit au moins un ressort (7) et/ou sur ledit au moins un guide linéaire (10).

12. Procédé (100) de fabrication d'un dispositif de préhension (1) qui est conçu pour recevoir des récipients à boisson et qui comprend au moins les composants suivants:
- une suspension (3), au moins un moyen de préhension (8) conçu pour recevoir des récipients à boisson au moyen d'air comprimé, au moins une liaison de conduite fluidique destinée à faire passer une surpression ou une dépression audit au moins un moyen de préhension (8) conçu pour recevoir des récipients à boisson, ainsi qu'au moins un ressort (7), c'est par l'intermédiaire duquel au moins un ressort (7) que ledit au moins un moyen de préhension (8) conçu pour recevoir des récipients à boisson au moyen d'air comprimé est relié à la suspension (3), le procédé comprenant les étapes suivantes consistant à:
- assembler et/ou fabriquer les composants du dispositif de préhension (1) de telle sorte qu'il en résulte la fabrication du dispositif de préhension (1), **caractérisé par le fait que**
- ledit au moins un ressort (7) est fabriqué en tant qu'au moins un ressort hélicoïdal (7') et au moins par zones en tant que tige creuse (7"), laquelle tige (7") qui est creuse au moins par zones fournit ladite au moins une liaison de conduite fluidique destinée à faire passer une surpression ou une dépression audit au moins un moyen de préhension (8) conçu pour recevoir des récipients à boisson.

13. Procédé selon la revendication 12, dans lequel,
- la suspension (3) et ledit au moins un ressort (7) sont fabriqués d'un seul tenant et en matière plastique, ou dans lequel
- la suspension (3) et ledit au moins un ressort (7) ainsi qu'au moins une douille (12) qui est conçue en tant que composant d'au moins un guide linéaire (10) prévu pour ledit au moins un moyen de préhension (8) sont fabriqués d'un seul tenant et en matière plastique.

14. Procédé selon la revendication 12 ou la revendication 13, dans lequel
- la suspension (3) et ledit au moins un ressort (7) sont fabriqués d'un seul tenant et en matière plastique selon le procédé d'impression tridimensionnelle, ou dans lequel
- la suspension (3) et ledit au moins un ressort (7) ainsi qu'au moins une douille (12) qui est conçue en tant que composant d'au moins un guide linéaire (10) prévu pour ledit au moins un moyen de préhension (8) sont fabriqués d'un seul tenant et en matière plastique selon le procédé d'impression tridimensionnelle.
